Europäisches Patentamt

European Patent Office

Office européen des brevets

(11) Veröffentlichungsnummer: **0 504 924 A2**

# (12) EUROPÄISCHE PATENTANMELDUNG

(21) Anmeldenummer: **92104890.6**

(22) Anmeldetag: **20.03.92**

(51) Int. Cl.5: **C08B 37/00, A23L 1/09**

(30) Priorität: **22.03.91 DE 4109500**

(43) Veröffentlichungstag der Anmeldung:
**23.09.92 Patentblatt 92/39**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Cosmo, Robert, Dr.**
**Wegscheide 9**
**W-6100 Darmstadt 23(DE)**
Erfinder: **Dettmeier, Udo, Dr.**
**Behringstrasse 17**
**W-6233 Kelkheim (Taunus)(DE)**
Erfinder: **Leupold, Ernst Ingo, Dr.**
**Auf der Erlenwiese 61**
**W-6392 Neu-Anspach(DE)**

(54) **Verfahren zur Herstellung von Polykondensaten aus Glucose und/oder Maltose und mehrwertigen Alkoholen.**

(57) Verfahren zur Herstellung von Polykondensaten aus Glucose und/oder Maltose und unverzweigten, mehrwertigen Alkoholen mit 3 bis 6 C-Atomen, wobei ein C-Atom eine O-galactopyranosyl- oder O-glucopyranosyl-Gruppe tragen kann und die restlichen C-Atome Hydroxylgruppen tragen oder jedes C-Atom eine Hydroxylgruppe trägt, durch Schmelzkondensation, dadurch gekennzeichnet, daß die Polykondensation in Gegenwart von Ascorbinsäure durchgeführt wird.

EP 0 504 924 A2

Die Erfindung betrifft ein Verfahren zur Herstellung von Polykondensaten aus Glucose und/oder Maltose und mehrwertigen Alkoholen in Gegenwart von Ascorbinsäure.

Polykondensate aus Glucose und Sorbit sind wichtige diätetische Füllstoffe für zahlreiche Lebensmittel.

Aus den Patentschriften US-PS 3 766 165, US-PS 3 876 794 und DE-PS 2 513 931 ist bekannt, daß man Polykondensate aus Sacchariden und mehrwertigen Alkoholen (insbesondere aus Glucose und Sorbit) durch eine mit Säure katalysierte Kondensation erhält. Als Katalysatoren werden Polycarbonsäuren mit mindestens 2 Carboxylgruppen eingesetzt. Die Verwendung von Monocarbonsäuren führt zu weniger befriedigenden Ergebnissen (US-PS 3 766 165, Spalte 4, Zeile 37 bis 40).

Es erschien daher wenig aussichtsreich, die Polykondensation in Gegenwart von Ascorbinsäure, dem für die Ernährung essentiellen Vitamin C, durchzuführen. Überraschenderweise wurde jedoch festgestellt, daß die Polykondensation von Glucose oder Maltose und mehrwertigen Alkoholen durch Ascorbinsäure sehr wirksam katalysiert wird.

Gegenstand der vorliegenden Erfindung ist nun ein Verfahren zur Herstellung von Polykondensaten aus Glucose und/oder Maltose und unverzweigten, mehrwertigen Alkoholen mit 3 bis 6 C-Atomen, wobei ein C-Atom eine O-galactopyranosyl- oder O-glucopyranosyl-Gruppe tragen kann und die restlichen C-Atome Hydroxylgruppen tragen oder jedes C-Atom eine Hydroxylgruppe trägt, durch Schmelzkondensation, das dadurch gekennzeichnet ist, daß die Polykondensation in Gegenwart von Ascorbinsäure durchgeführt wird. Es können also auch Gemische von Glucose und Maltose eingesetzt werden, vorzugsweise jedoch nur Glucose.

Im Gegensatz zu den Polycarbonsäuren der genannten Patentschriften verfügt die Ascorbinsäure nur über eine Lacton-, aber keine Carboxylgruppe. Da in den genannten Patentschriften mindestens zwei Carboxylgruppen als notwendig beschrieben werden, war die Wirkung von Ascorbinsäure nicht vorhersehbar. Bei der Durchführung des erfindungsgemäßen Verfahrens wird zweckmäßig eine wasserfreie oder eine weitgehend wasserfreie Schmelze der Ausgangsstoffe hergestellt, um eine homogene Mischung der Reaktionskomponenten zu gewährleisten. Diese Schmelze kann beispielsweise durch das Verschmelzen der Ausgangsstoffe bei Temperaturen unter dem Zersetzungspunkt, oder durch das Verdampfen einer wäßrigen Lösung der Ausgangsstoffe, vorzugsweise unter vermindertem Druck, erzielt werden. Die Lösung hat im allgemeinen einen Feststoffgehalt von etwa 30 bis 85 Gew.-%, vorzugsweise einen solchen von etwa 65 bis 75 Gew.-%. Im ersten Fall ist eine Temperatur zwischen etwa 110 und 150°C bevorzugt, während im zweiten Fall eine Temperatur zwischen etwa 50 und 100°C bevorzugt ist. Hierzu kann beispielsweise ein Dünnschichtverdampfer angewandt werden. Der wasserfreie Sirup wird schließlich der Polykondensation unterworfen.

Der bei der Reaktion angewandte Druck kann in breiten Grenzen schwanken. Vorzugsweise wird ein Druck von unter etwa 100 mbar angewandt, der mit den üblichen Vorrichtungen eingestellt werden kann. Vorzugsweise wird die Polykondensation unter einem schwachen Stickstoff-Strom durchgeführt, um eine Verfärbung des Produktes und eine Oxidation der Ascorbinsäure so weit wie möglich zu vermeiden.

Beispiele für die erfindungsgemäß eingesetzten mehrwertigen Alkohole sind Sorbit, Glycerin, Erythrit, Xylit, Mannit oder Galactit, vorzugsweise wird Sorbit eingesetzt. Bei den mehrwertigen Alkoholen, die mit einer O-galactopyranosyl- oder O-glucopyranosyl-Gruppe substituiert sind, handelt es sich im allgemeinen um Disaccharidalkohole, wobei 4-O-$\beta$-D-galactopyranosyl-D-sorbitol (Laktit), 4-O-$\alpha$-D-glucopyranosyl-D-sorbitol (Maltit) und ein Gemisch aus 6-O-$\alpha$-D-glucopyranosyl-D-mannitol und 6-O-$\alpha$-D-glucopyranosyl-D-sorbitol (®Palatinit) bevorzugt sind. Die verschiedenen mehrwertigen Alkohole können auch ganz allgemein als Gemische eingesetzt werden.

Es kommen aber auch andere Alkohole, die für Nahrungsmittel geeignet sind, in Frage.

Die Produkte des erfindungsgemäßen Verfahrens können mit verschiedenen Verhältnissen der Ausgangskomponenten hergestellt werden. Der Anteil an mehrwertigem Alkohol beträgt im allgemeinen zwischen etwa 5 und 20 Mol-%, vorzugsweise zwischen etwa 8 und 12 Mol-%, bezogen auf die Summe der Reaktionsteilnehmer, welcher Begriff die Ascorbinsäure einschließt.

Die Ascorbinsäure wird im allgemeinen in einer Menge von etwa 0,1 bis 10 Mol-%, vorzugsweise von 0,5 bis 2 Mol-%, bezogen auf die Summe der Reaktionsteilnehmer, eingesetzt. Die Geschwindigkeit der Polykondensation nimmt mit zunehmendem Anteil an Ascorbinsäure zu. Die Verwendung von größeren Mengen an Ascorbinsäure bewirkt jedoch im allgemeinen die Bildung von Polykondensaten, die für die Verwendung in Lebensmitteln zu sauer sind.

Die Reaktionstemperatur für die Schmelzkondensation liegt zweckmäßig zwischen etwa 130 und 280°C. Die erhöhte Temperatur ist zur Verdampfung des während der Reaktion gebildeten Wassers von Vorteil. Bei diskontinuierlichem Arbeiten soll die Temperatur zweckmäßig zwischen etwa 130 und 180°C, vorzugsweise zwischen 140 und 160°C, liegen. Die Reaktionszeit, die zur Erzielung des gewünschten Polymerisationsgrades erforderlich ist, nimmt mit steigender Temperatur ab. Bei höheren Temperaturen kann die Reaktionszeit entsprechend kurz gehalten und so Verfärbungen und Karamelisierungen möglichst weitgehend vermieden werden. Die bei kontinuierlicher Arbeitsweise angewandten Temperaturen liegen zweckmäßig zwischen etwa 150 und 280°C, vorzugsweise zwischen 170 und 220°C.

Das Fortschreiten der Polykondensation zeigt sich in einer Gewichtsabnahme während der Reaktion. Diese ist auf die Verdampfung des während der Reaktion gebildeten Wassers zurückzuführen und beträgt bis zu 10 %. Sie weist auf die äußerst wirksame Katalyse der Polykondensation durch Ascorbinsäure hin.

Die Produkte der vorliegenden Erfindung sind wasserlöslich und haben ein mittleres Molekulargewicht von etwa $M_n = 1000$. Der pH-Wert einer 10 %igen Lösung der Produkte beträgt etwa 3 bis 4. Die Produkte enthalten im allgemeinen etwa 0,4 bis 0,8 Gew.-% Ascorbinsäure.

Die Produkte werden als gelbe bis braune, spröde, aufgeschäumte Schmelzen erhalten. Diese brauchen im allgemeinen nicht chemisch gereinigt zu werden. Sie können mechanisch pulverisiert werden. Es kann aber auch eine wäßrige Lösung des Produktes sprühgetrocknet werden, wodurch ein feines Pulver erhalten wird. Dieses grau-weiße bis hellgelbe Pulver eignet sich als diätetischer Mehlersatz in Lebensmitteln.

Diese Produkte haben gegenüber den im zitierten Stand der Technik beschriebenen Produkten den Vorteil, daß das für die Ernährung essentielle Vitamin C enthalten ist, ohne daß dieses als Zusatz nach der Polykondensation beigemischt werden muß. Sie können als diätetische Füllstoffe für eine große Palette von Lebensmitteln, wie Süßwaren, Gebäcke, Eiscreme u.a., dienen und besitzen zuckerähnliche Eigenschaften. Sie schmecken allerdings nur wenig süß. Die für einige Anwendungsbereiche fehlende Süßkraft kann durch den Zusatz von intensiven Süßstoffen, wie Acesulfam K oder Aspartam kompensiert werden.

Beispiele

1. Eine Mischung aus Glucose (71,76 g), Sorbit (8,13 g) und Ascorbinsäure (0,79 g) wurde in einem Glaskolben bei 130°C erhitzt, bis eine klare Schmelze entstand. Dieser wurde bei einem Druck von 5 mbar evakuiert und für 14 Stunden auf 140°C erhitzt. Der gelbe Schaum (73,47 g, 9 % Gewichtsverlust, bezogen auf die Summe der Ausgangssubstanzen) wurde vermahlen. Das Produkt hat ein mittleres Molekulargewicht von $M_n = 1000$ und enthält 0,5 Gew.-% Ascorbinsäure, 1,6 Gew.-% Glucose und 1,1 Gew.-% Sorbit. Der pH-Wert einer 10 %igen wäßrigen Lösung betrug 3,4.

2. Glucose (71,65 g), Sorbit (8,13 g) und Ascorbinsäure (0,79 g) wurden mit 35 ml Wasser in einem Glaskolben so lange auf 70°C erhitzt, bis eine klare Lösung entstand. Das Wasser wurde unter Entspannung bei einem Druck von 5 bis 10 mbar und einer Temperatur von 50 bis 80°C verdampft. Die klare Schmelze wurde bei einem Druck von 5 mbar für 24 Stunden bis zu einer Temperatur von 145°C erhitzt. Der gelbe Schaum (73,47 g, 9 % Gewichtsverlust, bezogen auf die Summe der Ausgangsstoffe) wurde vermahlen. Das Produkt hat ein mittleres Molekulargewicht von $M_n = 1060$ und enthält 0,5 Gew.-% Ascorbinsäure, 1,2 Gew.-% Glucose und 1,1 Gew.-% Sorbit.

3. Eine Mischung aus Glucose /165,6 g), Laktitdihydrat (42,7 g) und Ascorbinsäure (2,14 g) wurde in einem Becherglas bei 140°C verschmolzen und der größte Teil davon (191,8 g) auf eine Glasschale gegossen. Die Schmelze wurde in einem Vakuumofen bei einem Druck von 5mbar für 5 Stunden auf 155°C erhitzt. Der hellgelbe Schaum (174,0 g, 7,5 % Gewichtsverlust, bezogen auf die Summe der wasserfreien Ausgangsstoffe) wurde vermahlen. Das Produkt hat ein mittleres Molgewicht von $M_n = 830$. Der pH-Wert einer 10 %igen wäßrigen Lösung betrug 3,2.

**Patentansprüche**

1. Verfahren zur Herstellung von Polykondensaten aus Glucose und/oder Maltose und unverzweigten, mehrwertigen Alkoholen mit 3 bis 6 C-Atomen, wobei ein C-Atom eine O-galactopyranosyl- oder O-glucopyranosyl-Gruppe tragen kann und die restlichen C-Atome Hydroxylgruppen tragen oder jedes C-Atom eine Hydroxylgruppe trägt, durch Schmelzkondensation, dadurch gekennzeichnet, daß die Polykondensation in Gegenwart von Ascorbinsäure durchgeführt wird.

2. Verfahren nach Anspruch 1, dadurch gekennzeichnet, daß als mehrwertiger Alkohol Sorbit, Laktit, Maltit und/oder Palatinit eingesetzt wird.

3. Verfahren nach Anspruch 1 oder 2, dadurch gekennzeichnet, daß die Ausgangsstoffe bei Temperaturen von 110 bis 150°C verschmolzen werden und man diese Schmelze der Polykondensation unterwirft.

4. Verfahren nach Anspruch 1 oder 2, dadurch gekennzeichnet, daß man eine wäßrige Lösung der Ausgangsstoffe mit einem Feststoffgehalt von etwa 30 bis 85 Gew.-%, vorzugsweise etwa 65 bis 75 Gew.-%, bei einer Temperatur zwischen etwa 50 und 100°C entwässert und dann der Polykondensation unterwirft.

5.  Verfahren nach einem oder mehreren der Ansprüche 1 bis 4, dadurch gekennzeichnet, daß die Ascorbinsäure in einer Menge von 0,1 bis 10 Mol-%, vorzugsweise von 0,5 bis 2 Mol-%, bezogen auf die Summe der Reaktionsteilnehmer, eingesetzt wird.

6.  Verfahren nach einem oder mehreren der Ansprüche 1 bis 5, dadurch gekennzeichnet, daß der mehrwertige Alkohol in einer Menge von 5 bis 20 Mol-%, vorzugsweise von 8 bis 12 Mol-%, bezogen auf die Summe der Reaktionsteilnehmer, eingesetzt wird.

7.  Verfahren nach einem oder mehreren der Ansprüche 1 bis 6, dadurch gekennzeichnet, daß die Polykondensation bei Temperaturen zwischen 130 und 280°C durchgeführt wird.

8.  Verfahren nach einem oder mehreren der Ansprüche 1 bis 7, dadurch gekennzeichnet, daß die Polykondensation bei einem Druck von unter 100 mbar durchgeführt wird.

9.  Verfahren nach einem oder mehreren der Ansprüche 1 bis 8, dadurch gekennzeichnet, daß man eine wäßrige Lösung des Produktes sprühtrocknet.

10. Verwendung der nach einem oder mehreren der Ansprüche 1 bis 9 hergestellten Produkte als diätetische Füllstoffe.